# Europäisches Patentamt
# European Patent Office
# Office européen des brevets

(19)

(11) Veröffentlichungsnummer: **0 162 354**
**B1**

(12) # EUROPÄISCHE PATENTSCHRIFT

(45) Veröffentlichungstag der Patentschrift:
**25.01.89**

(51) Int. Cl.⁴: **C 04 B  28/04,** C 04 B  24/26, B 32 B  13/04

(21) Anmeldenummer: **85105389.2**

(22) Anmeldetag: **03.05.85**

(54) **Zwei- oder mehrschichtige Bauelemente und Verfahren zu deren Herstellung.**

(30) Priorität: **15.05.84  DE 3418002**

(43) Veröffentlichungstag der Anmeldung:
**27.11.85 Patentblatt 85/48**

(45) Bekanntmachung des Hinweises auf die Patenterteilung:
**25.01.89 Patentblatt 89/4**

(84) Benannte Vertragsstaaten:
**AT CH DE LI NL**

(56) Entgegenhaltungen:
**AU-B-493 167**
**DE-A-2 729 474**
**FR-A-2 154 035**
**GB-A-2 069 477**

(73) Patentinhaber: **PCI Polychemie GmbH,**
**Piccardstrasse 10, D-8900 Augsburg 1 (DE)**

(72) Erfinder: **Besse, Heinz, Tournelystrasse 27, D-8901**
**Stadtbergen 2 (DE)**

(74) Vertreter: **Eitle, Werner, Dipl.- Ing., Hoffmann,**
**Eitle & Partner Patentanwälte Arabellastrasse 4,**
**D-8000 München 81 (DE)**

EP 0 162 354 B1

## Beschreibung

Die Erfindung betrifft zwei- oder mehrschichtige Bauelemente und Verfahren zu deren Herstellung.

Wandbauteile aus vorgefertigten Betontafeln sind seit Jahren eingeführt. Bemühungen, diese Tafeln bei der Herstellung mit anderen Werkstoffen, z. B. Hartschaumstoffplatten, zu kombinieren oder in der Oberfläche mit keramischem Belagmaterial oder Kies zu gestalten, sind gelungen. So wird z. B. in der DE-OS-2 807 537 ein vorgefertigtes Grosswandbauteil für Aussenwände mit armiertem Schwerbeton beschrieben, dem aussenseitig eine Wärmedämmschicht aus geschlossenzelligem Kunststoffschaum, insbesondere Polystyrolschaum, anbetoniert ist.

In der DE-OS-2 745 250 wird eine Verbundplatte aus keramischen Sichtplatten, wie Fliesen, Spaltplatten oder dergleichen, zur Herstellung von vorgehängten, hinterlöfteten Flächenverkleidungen beansprucht, die aus einer Trägerplatte aus gegossenem Acrylbeton besteht, an der die keramischen Platten mittels eines Zweikomponenten-Epoxidharzklebers befestigt sind. Mehrfachkombinationen der angegebenen Art sind aber wegen der unterschiedlichen Werkstoffeigenschaften und den daraus resultierenden Spannungen problematisch.

Aus diesem Grund können die höheren Festigkeitseigenschaften von Kombinationen mit Zementmörtelschichten nicht genutzt werden. Komplizierte Wandbauelemente für unterschiedliche Raumnutzungen, wie z. B. Fliesenflächen für die Nasseite, kombiniert mit Hartschaumstoffen als Wärmedämmung und Holzspanplattenabdeckung für die Wohnseite sind, wenn überhaupt, nur in getrennten Arbeitsgängen herzustellen.

Das Bedürfnis nach solchen Mehrschichtverbundbauelementen ist im Fertighausbau oder auch im kommerziellen Wohnungs- oder Gewerbebau als rationelle Ausbaumethode gross. Darüber hinaus hat sich mit der Einführung der Fussbodenheizung ein Interesse an nach unten wärmedämmenden, lastverteilenden Bodenplatten ergeben, in die oberhalb der Wärmedämmschicht Heizrohre eingebettet und dann im Verbund oder schwimmend mit Estrichschichten überdeckt werden können.

Bei den Versuchen einer rationellen Vorfertigung solcher Boden- oder Wandelemente hat sich gezeigt, dass mit normalen, starren, hydraulisch erhärtenden Mörteln Mehrschichtwerkstoffkombinationen nicht möglich sind. So zeigt eine derart verbundene Kombination von Polystyrol-Hartschaumstoffen mit Gipskarton- oder Holz-Spanplatten Ablösungen in der Verbundschicht.

Die natürliche Mörtelkonsistenz erschwert die Ausbildung entsprechend planer Verbundschichten. Geeignete Verbindungen können nur - wie z. B. in der bereits genannten DE-OS-2 745 250 ausgeführt - mit Kunstharzklebstoffen oder ähnlichem hergestellt werden. Bei der Kombination von massungenauen Werkstoffen scheiden die nur dünnschichtig aufzubringenden Kunstharzklebstoffe jedoch aus. Direkt nutzbare Lastverteilungsschichten sind damit nicht herstellbar.

Der Erfindung liegt daher die Aufgabe zugrunde, aus unterschiedlichen Werkstoffen bestehende Verbundelemente wie Wand- und Bodenplatten, Trennwände für Nasszellen, Wärmedämmung tragende Fassadenelemente u.a. in den verschiedensten Kombinationen für die unterschiedlichsten Einsatzbereiche zu schaffen, wobei ein dauerhafter, fester Verbund zwischen den unterschiedlichen Werkstoffen erreicht werden soll.

Erfindungsgemäss wird diese Aufgabe gelöst durch die Schaffung von Bauelementen der eingangs genannten Art, die dadurch gekennzeichnet sind, dass der Verbund in einer Arbeitsfolge durch einen fliessfähigen, hydraulisch erhärtenden, kunststoffvergüteten Mörtel bewirkt ist.

Vorteilhafterweise ist der fliessfähige, hydraulisch erhärtende kunststoffvergütete Mörtel unter Zufügung von Wasser aus Zement, quarzitischen und/oder calcitischen Sanden bzw. Mehlen, polymerem Bindemittel, Verflüssiger und gegebenenfalls weiteren üblichen Zusätzen gebildet.

Nach einer bevorzugten Ausführungsform der Erfindung ist der Zementanteil des Mörtels zumindest anteilig aus Portlandzement gebildet. Besonders geeignete Typen von Portlandzement sind PZ35F, PZ45F, PZ55, gemäss DIN 1164 oder Gemische hiervon.

Das polymere Bindemittel kann auf der Basis von Monomeren, die unter Styrol, Acrylsäureester, Methacrylsäureester, Butadien- und Vinylestern ausgewählt sind, Olefinen, Vinylhalogeniden, Vinylidenhalogeniden, natürlichen Polymeren, einzeln oder im Gemisch - sei es als Homopolymerisat und/oder Copolymerisat - in Form einer wässrigen Dispersion und/oder eines in Wasser redispergierbaren Pulvers formuliert werden. Beispiele solcher Polymeren sind dem Fachmann bekannt und werden nachstehend im Zusammenhang mit der Polymerkomponente des hydraulisch erhärtenden Mörtels weiter ausgeführt.

Der Mörtel enthält eine Verflüssigerkomponente. Diese stellt mit besonderem Vorzug ein anionisches Sulfonsäuregruppen enthaltendes Kondensationsprodukt aus Melamin-Formaldehyd dar. In alternativer Weise können jedoch auch Naphthalinsulfonat, Ligninsulfonat, Casein oder Gemische hiervon zum Einsatz gelangen.

In Abhängigkeit von den zu verbindenden Schichten des Bauelementes können übliche Zusätze, wie Kolloide, Pigmente, Entschäumer, Beschleuniger, Verzögerer, latent hydraulische Zuschläge oder Mischungen hiervon zugefügt werden.

Nachstehend werden hydraulisch erhärtende Mörtel, die im Rahmen der Erfindung mit Vorteil einsetzbar sind, beschrieben. Sie sind insbesondere gebildet aus: - Zementen, wie Portland-, Hochofen-, Aluminatzement;

- quarzitischen und/oder calcitischen Sanden und/oder quarzitischen und/oder calcitischen Mehlen;

- wässrigen Dispersionen aus polymeren Bindemitteln auf der Basis von Monomeren, wie Styrol, Methacrylsäureester, Acrylsäureester, Butadien, Vinylester, wie z. B. Vinylacetat, Vinylpropionat, Vinylbutyrat, Vinylpivalat, Vinyl-2-ethylhexoat, Vinylisononat, Vinylstearat, Vinyllaurat, Vinylversatat, Olefine, vorzugsweise mit 2 bis 4 Kohlenstoffatomen, wie z. B. Ethylen, Propylen, Isobutylen, Vinylhalogenide, wie beispielsweise Vinylchlorid, Vinylidenchlorid, Vinylfluorid, Vinylidenfluorid, Vinylpropionat als Homopolymerisat oder deren Mischpolymerisaten oder natürlichen Polymeren und/oder redispergierbaren Kunstharzdispersionspulvern, wie z. B. von Mischpolymerisaten aus Monomeren auf Basis von Vinylester, wie z. B. Vinylacetat, Vinylpropionat, Vinylbutyrat, Vinylpivalat, Vinyl-2-ethylhexoat, Vinylisononat, Vinylstearat, Vinyllaurat, Vinylversatat, Olefine, vorzugsweise mit 2 bis 4 Kohlenstoffatomen, wie z. B. Ethylen, Propylen, Isobutylen oder Abmischungen derselben, wie sie als Bindemittel für Bautenanstriche, Putze und Mörtelzusatzmittel verwendet werden;

- Betonverflüssiger auf Basis von anionischen Sulfonsäuregruppen enthaltenden Melamin-Formaldehyd-Kondensationsprodukten oder Naphthalinsulfonat oder Ligninsulfonat oder Casein oder Abmischungen derselben;

sowie gegebenenfalls

- latent hydraulische Zuschläge, wie Trass, Hochofenschlacke, Elektrofilter-Flugasche, Gips oder Mischungen derselben;

- Kolloiden in Form von Polyvinylalkoholen oder Methylcellulosederivaten;

- Entschäumern auf Basis von Fettsäureestern oder Silikonen;

- Salzen von Alkali- oder Erdalkalimetallen und/oder mehrbasischen organischen Säuren als Erstarrungsverzögerer.

Bevorzugte Zusammensetzungen des mit Wasser anzumachenden Mörtels bestehen aus:

100 bis 350 Gew.-Teilen Zement
100 bis 1600 Gew.-Teilen quarzitischen und/oder calcitischen Sanden bzw. Mehlen
5 bis 400 Gew.-Teilen polymerem Bindemittel
0,1 bis 20 Gew.-Teilen Verflüssiger, sowie
0 bis 500 Gew.-Teilen weiteren üblichen Zusätzen.

Der Mörtel kann somit angesetzt werden aus:

100 - 350 Gew.Teilen Portlandzement PZ35F (alternativ PZ45F, PZ55), Hochofen-, Aluminatzement und Gemischen dieser, und gegebenenfalls latent hydraulischen Zuschlägen, wie Trass, Hochofenschlacke, Elektrofilter-Flugasche, Gips oder Abmischungen derselben;

100 - 1600 Gew.-Teilen quarzitischen und/oder calcitischen Sanden und/oder quarzitischen und/oder calcitischen Mehlen;

5 - 400 Gew.-Teilen einer wässrigen Dispersion aus polymeren Bindemitteln auf der Basis von Monomeren, wie Styrol, Methacrylsäureester, Acrylsäureester, Butadien, Vinylester, wie z. B. Vinylacetat, Vinylpropionat, Vinylburyrat, Vinylpivalat, Vinyl-2-ethylhexoat, Vinylisononat, Vinylstearat, Vinyllaurat, Vinylversatat, Olefine, vorzugsweise mit 2 bis 4 Kohlenstoffatomen, wie z. B. Ethylen, Propylen, Isobutylen, Vinylhalogenide, wie beispielsweise Vinylchlorid, Vinylidenchlorid, Vinylfluorid, Vinylidenfluorid, Vinylpropionat als Homopolymerisat oder deren Mischpolymerisaten oder natürlichen Polymeren und/oder eines redispergierbaren Kunstharzdispersionspulvers, wie z. B. von Mischpolymerisaten aus Monomeren auf Basis von Vinylester, wie z. B. Vinylacetat, Vinylpropionat, Vinylbutyrat, Vinylpivalat, Vinyl-2-ethylhexoat, Vinylisononat, Vinylstearat, Vinyllaurat, Vinylversatat, Olefine, vorzugsweise mit 2 bis 4 Kohlenstoffatomen, wie z. B. Ethylen, Propylen, Isobutylen oder Abmischungen derselben;

0,1 - 20 Gew.-Teilen eines Verflüssigers, wie z. B. anionisches Sulfonsäuregruppen enthaltendes Melamin-Formaldehyd-Kondensationsprodukt oder Naphthalinsulfonat oder Ligninsulfonat oder Casein oder Abmischungen derselben;

0 - 10 Gew.-Teilen Polyvinylalkohol oder Methylcellulose mit einem Polymerisationsgrad unter 2000;

1 - 3 Gew.-Teilen eines Entschäumers auf Basis eines Fettsäureesters;

0,1 - 6 Gew.-Teilen wasserlöslichen Salzen von kristalliner Citronensäure; 0,1 - 499 Gew.-Teilen Wasser.

Eine besonders vorteilhafte Formulierung des Mörtels ist gebildet aus:

200 bis 320 Gew.-Teilen Portlandzement
400 bis 800 Gew.-Teilen quarzitischem Sand
30 bis 150 Gew.-Teilen einer wässrigen Dispersion eines Butadien-Styrol-Mischpolymerisates
5 bis 15 Gew.-Teilen eines Sulfonsäuregruppen enthaltenden Melamin-Formaldehyd-Kondensates
und üblichen Zusätzen.

Im Rahmen der Erfindung kann es bevorzugt sein, dem verwendeten Mörtel
- als Verflüssiger das anionische Sulfonsäuregruppen enthaltende Kondensationsprodukt aus Melamin und Formaldehyd entweder als wässrige Lösung mit 20 % Feststoffgehalt oder in fester Form als Pulver zuzugeben;

- als Erstarrungsverzögerer kristalline Citronensäure oder deren wasserlösliche Salze in Mengen von 0,1 bis 6,0 Gew.-Teilen zuzusetzen;

- einen Polyvinylalkohol mit einem Hydrolysierungsgrad von mehr als 97 % und einem Polymerisationsgrad von weniger als 2000 in Mengen von 0 bis 10 Gew.-Teilen zuzusetzen;

- eine Methylcellulose mit einer Teilalkylierung von 24 bis 32 % und einem Polymerisationsgrad von weniger als 1000 in Mengen von 0 bis 10 Gew.-Teilen zuzufügen;

- einen nicht-ionogenen Fettsäureester 100-%-ig oder in seiner wässrigen Dispersion oder ein Siliconöl 100-%-ig oder in einer wässrigen Dispersion in Mengen von 0,1 bis 3,0 Gew.-Teilen zuzusetzen;

- synthetisches Eisenoxid oder andere anorganische oder organische Pigmente und Farbstoffe in Mengen von 0 bis 100 Gew.-Teilen zuzufügen;

wobei diese Massnahmen einzeln oder in Kombination Anwendung finden können.

Die Sichtflächen (Deckschichten) der erfindungsgemässen Bauelemente können aus Naturstein, keramischen Fliesen oder Platten, aus Asbestzement-, Gips-, Gipskarton-, Bolzspan- (auch zementgebunden), Sperrholz- oder Metallplatten bestehen. Ausserdem können sie mit kiesdurchsetzten Mörtelschichten oder mit kunststoffmodifizierten Mörtelschichten allein abgedeckt sein.

Die Zwischenschichten und/oder unterseitigen bzw. rückseitigen Schichten dieser Bauelemente können mit Vorteil dagegen aus spezifisch leichten Werkstoffen, wie anorganischen oder organischen Schaum- oder Dämmstoffen oder Holzspan- oder Gasbetonplatten bestehen.

Besonders bevorzugte Bauelemente der vorliegenden Erfindung enthalten als Deckschicht keramische Fliesen bzw. Platten oder Naturstein und als Zwischen- bzw. Unterschicht Polyurethan-Schaumstoffplatten oder Polystyrol-Hartschaumstoffplatten. Nach einer besonders in Betracht gezogenen, ebenfalls bevorzugten Ausführungsform der Erfindung ist dieser Verbund zusätzlich mit einer unter- bzw. rückseitigen Schicht aus Gipskartonplatte ausgebildet, wobei der Verbund zwischen den einzelnen Schichten jeweils mit den vorstehend beschriebenen Mörteln durchgeführt wird.

Es ist häufig besonders günstig, wenn der Mörtel durch die Zusammenstellung der vorstehend angegebenen Bestandteile innerhalb der ebenfalls angeführten Mengenbereiche selbstverlaufend ausgebildet ist. Üblicherweise liegt der Mörtel in einer Dicke von 5 bis 15 mm vor, wobei jedoch in Einzelfällen, je nach Art der zu verbindenden Substrate, die Dickenangaben manchmal unter- bzw. überschritten werden können.

Ein im Rahmen der Erfindung besonders in Betracht gezogenes Bauelement ist in den Ansprüchen 9 und 10 angegeben, wobei die Schaumstoffdämmplatte bei dieser Ausführungsform alternativ auch aus Polyurethan ausgebildet sein kann.

Im Rahmen der Erfindung lassen sich mit Vorteil Kombinationen aus Hartschaumstoffen mit diesem Mörtel als Trockenestrichplatten oder entsprechend geformt als Elemente zur Aufnahme von Heizungsrohren herstellen.

Kombinationen von Holzspanplatten oder Hartfaserplatten, die ein- oder beidseitig mit keramischen Fliesen oder Platten belegt werden, ergeben Wandelemente oder Zwischenwände, die beispielsweise für Nasszellen von Interesse sind.

Holzspanplatten und Kies in Waschbetonausführung dienen als Fassadenelemente, insbesondere dann, wenn sie als Innenlage noch eine wärmedämmende Schaumstoffschicht enthalten.

Neben Holzspanplatten sind, je nach Anwendungszweck, als Trägerwerkstoff auch Gipskarton-, Gipsfaser-, Asbestzement-, Sperrholz- und Stahlplatten geeignet. Einige bevorzugte Ausführungsformen der erfindungsgemässen Bauelemente sowie deren Herstellung werden in den nachstehenden Beispielen, die jedoch nicht einschränkend aufzufassen sind, weiter veranschaulicht.

**Beispiel 1**

Isolierende Lastverteilungselemente für die Aufnahme von Heizungsrohren bei der Installation von Fussbodenheizungen:

In eine Form aus PVC oder Stahl wird eine selbstverlaufende Mörtelmischung aus:

300 Gew.-Teilen Portlandzement 45F,

600 Gew.-Teilen Sand von der Körnung 0,1 bis 0,4 mm,

60 - 80 Gew.-Teilen wässrige Dispersion eines Butadien/Styrol-Mischpolymerisates mit der Mindestfilmbildungstemperatur von 5°C (Dow Latex 460),

80 - 100 Gew.-Teilen Wasser,

10 Gew.-Teilen 20 %-ige wässrige Lösung eines Melamin-Formaldehyd-Kondensates (Melment L - 10),

7,0 Gew.-Teilen Natriumligninsulfonat (ZEWA-SL),

2,0 Gew.-Teilen kristalline Citronensäure, 1,5 Gew.-Teilen wässtige Dispersion eines Siliconöls (Nopco 8034 E) gegossen.

In die frische Mörtelschicht wird eine Platte aus Polystyrol(PS)-Hartschaum mit der Dichte 20 kg/m³ und der Dicke 25 mm eingelegt. Nach 24 Stunden kann das Element entfernt werden. Die Platten werden auf dem Boden ausgelegt und in die vorgeformten Vertiefungen der Mörtelschicht die Heizungsrohre eingelegt.

**Beispiel 2**

Isolierendes Lastverteilungselement als Trockenestrichplatte:
In eine plane Form aus PVC oder Stahl wird eine selbstverlaufende Mörtelmischung aus:

300 Gew.-Teilen Portlandzement 35F,
600 Gew.-Teilen Quarzsand, Körnung 0,1 bis 0,7 mm,
50 Gew.-Teilen eines redispergierbaren Kunststoffpulvers auf Basis Vinylacetat/Ethylen (Vinnapas RE545Z),
15 Gew.-Teilen eines Melamin-Formaldehyd-Kondensates (Melment F-10),
1,2 Gew.-Teilen eines Kolloids (Mowiol 4-88),
100 Gew.-Teilen Wasser,

oder aus:

150 Gew.-Teilen Portlandzement 35F,
150 Gew.-Teilen Flugasche (EFA-Füller),
50 Gew.-Teilen Anhydrit,
750 Gew.-Teilen einer Mischung aus Quarzsand und Kalksteinmehl mit der Körnung 0,1 bis 0,7 mm,
100 Gew.-Teilen ca. 50 %-ige wässrige Kunststoffdispersion auf Basis der Monomeren Styrol/Butadien (Rhodopas SBO 12F),
5 Gew.-Teilen eines Melamin-Formaldehyd-Kondensates (Melment F - 10),
1 Gew.-Teil eines Siliconentschäumers (Nopco 8034 E),
1 Gew.-Teil eines Fungizides (OZ - 10),
10 - 100 Gew.-Teilen Wasser nach Bedarf,

in etwa 10 mm Dicke eingegossen. Darin wird eine PS-Hartschaumstoffplatte wie in Beispiel 1 eingelegt, die wiederum mit einer dünnen Mörtelschicht von etwa 5 mm Dicke abgedeckt wird und in diese schliesslich versetzt eine weitere PS-Hartschaumstoffplatte eingelegt. Die Elemente können nach 24 Stunden entformt werden und auf Betonböden oder anderen versetzt verlegt werden. Die Mörteloberfläche ist völlig plan, direkt nutzbar oder mit Belagsmaterialien ohne Vorbehandlung zu belegen.

**Beispiel 3**

Herstellung von Wandbauelementen mit Waschbetoncharakter:
In eine Form wird ein Abbindeverzögerungspapier eingelegt. Darauf wird Kies in gewünschter Körnung gleichmässig ausgebreitet. Diese Kiesschicht wird mit einem Mörtel gemäss Beispiel 1 in etwa 15 mm Dicke übergossen. Darin wird eine PS-Hartschaumstoffplatte wie in Beispiel 1 eingelegt, die wiederum mit dem Mörtel in Ca. 5 mm Dicke überdeckt wird. In diese Schicht kann Versetzt eine Gipskarton- oder Holzspanplatte der Güte V 100 eingelegt werden. Der Restmörtel der erhärtenden Elemente wird auf der Kiesseite durch Waschen entfernt. Die Elemente können als Fassaden- oder Innenwandelement verwendet werden.

**Beispiel 4**

Herstellung von Wandbauelementen mit keramischen Belägen:
In einer Form werden in gewünschtem Dekor oder Mass gewählte keramische Fliesen oder Platten fixiert. Die Fugen werden mit einer Mörtelmischung aus:

280 Gew.-Teilen Portlandzement 45FHS,
350 Gew.-Teilen Kalksteinmehl 50 bis 250/$\mu$m,
140 Gew.-Teilen Quarzsand, Körnung 0,1 bis 0,4 mm,
17 Gew.-Teilen Titandioxid RN57P
1 Gew.-Teil Kolloide Polyviol 405/140,
130 Gew.-Teilen einer wässrigen Dispersion aus einem Acryl/Styrol-Mischpolymerisat, wie z. B. Acronal S 400,
80 Gew.-Teilen Wasser,
120 Gew.-Teilen einer wässrigen Lösung eines Melamin-Formaldehyd-Kondensationsprodukts (Melment L - 10),
8 Gew.-Teilen Natriumligninsulfonat (ZEWA SL),
2 Gew.-Teilen einer wässrigen Dispersion eines Siliconöls (Nopco 8034 E),
2 Gew.-Teilen kristallines Trikaliumcitrat,

ausgegossen und der keramische Belag mit dem gleichen Mörtel ca. 10 mm dick überschichtet. In die frische Mörtelschicht wird eine PS-Hartschaumstoffplatte wie in Beispiel 1 eingelegt, die wiederum mit dem Mörtel überschichtet wird. Darin kann je nach Anforderung und Anwendung eine Platte aus Stahl, Holzspan V 100 oder Gipskarton eingelegt werden. Diese Fläche kann wiederum mit Mörtel beschichtet und mit Fliesen belegt werden.
Die Elemente können innen und aussen verwendet werden.
Die Mörtelschichtdicken in den vorbeschriebenen Beispielen sollten 5 mm nicht unterschreiten und 15 mm nicht überschreiten. Die Auswahl der Verbundwerkstoffe richtet sich allein nach den Anforderungen der vorgesehenen Anwendung. Die Schaumstoffplatten bestehen vorzugsweise aus Polystyrol. Sie können aus Blockware geschnitten oder aus dem Extruder kalibriert sein. Die Dichte 20 kg/m$^3$ sollte nicht unterschritten werden. Die Dicke richtet sich nach den Anforderungen aus dem Wärme- und Trittschallschutz. Weitere Elementteile, wie Holz- oder Gipskartonplatten sind in ihrer Qualität auf dem Markt vorgegeben. Sie unterscheiden sich in Dicke und wasserfester Ausrüstung.
Die so hergestellten Elemente sind verformungsstabil. Die spannungsabbauende Eigenschaft des für die Herstellung der erfindungsgemässen Verbundbauelemente verwendeten Mörtels zeigte sich in Versuchen, die mit den in den Beisielen 1 bis 4 beschriebenen Verbundbauelementen nach 28 Tagen Lagerung im Normalklima DIN 50014-23/50-2 durchgeführt wurden. Nach 50 cyclischen Temperaturwechsellagerungen der beschriebenen Verbundbauelemente zwischen -20°C und +80°C ist trotz der unterschiedlichen thermischen Ausdehnungskoeffizienten sowie Quell- und Schwindwerte der einzelnen, in den Verbundbauelementen vorliegenden Werkstoffe kein Haftverlust oder Riss aufgetreten, d.h. die Verbundbauelemente hielten überraschenderweise diesen Belastungen ohne jede schadhafte Beeintrichtigung stand. Die Verbundfestigkeit unter den einzelnen Elementschichten ist grösser als die Eigenfestigkeit der Werkstoffe (keramische Werkstoffe oder Metall ausgenommen). Die Elemente können gesägt und gebohrt werden.

**Patentansprüche**

1. Zwei- oder mehrschichtige transportable Bauelemente mit gegebenenfalls aus unterschiedlichen Werkstoffen bestehenden Deck- und/oder Zwischenschichten, dadurch gekennzeichnet, dass der verbund in einer Arbeitsfolge durch einen hydraulisch erhärtenden, fliessfähigen, kunststoffvergüteten Mörtel der unter Zufugung von Wasser aus:
- Zement,
- quarzitischen und/oder calcitischen Sanden bzw. Mehlen,
- polymerem Bindemittel,
- Verflüssiger,
- und gegebenenfalls weiteren üblichen Zusätzen
gebildet ist, bewirkt ist.
2. Bauelement nach Anspruch 1, dadurch gekennzeichnet, dass der Zementanteil des Mörtels zumindest anteilig aus Portlandzement besteht.
3. Bauelement nach Anspruch 2, dadurch gekennzeichnet, dass der Zement bevorzugt PZ35F, PZ45F, PZ55 nach DIN 1164 oder Gemische hiervon darstellt.
4. Bauelement nach einem oder mehreren der Ansprüche 1 bis 3, dadurch gekennzeichnet, dass das polymere Bindemittel auf der Basis von Monomeren, die unter Styrol, Acrylsäureester, Methacrylsäureester, Butadien und Vinylestern ausgewählt sind, Olefinen, Vinylhalogeniden, Vinylidenhalogeniden, natürlichen Polymeren einzeln oder im Gemisch in Form einer wässrigen Dispersion und/oder eines in Wasser redispergierbaren Pulvers formuliert ist.
5. Bauelement nach einem oder mehreren der Ansprüche 1 bis 4, dadurch gekennzeichnet, dass der Verflössiger ein anionische Sulfonsäuregruppen enthaltendes Kondensationsprodukt aus Melamin-Formaldehyd, Naphthalinsulfonat, Ligninsulfonat, Casein oder Gemischen hiervon darstellt.
6. Bauelement nach einem oder mehreren der vorhergehenden Ansprüche, dadurch gekennzeichnet, dass die üblichen Zusätze Kolloide, Pigmente, Entschäumer, Beschleuniger, Verzögerer, latent hydraulische Zuschläge oder Mischungen hiervon darstellen.
7. Bauelement nach einem oder mehreren der vorhergehenden Ansprüche, dadurch gekennzeichnet, dass der mit Wasser anzumachende Mörtel aus:
100 bis 350 Gew.-Teilen Zement,
100 bis 1600 Gew.-Teilen quarzitischen und/oder calcitischen Sanden bzw. Mehlen,
5 bis 400 Gew.-Teilen polymerem Bindemittel,
0,1 bis 20 Gew.-Teilen Verflüssiger, sowie
0 bis 500 Gew.-Teilen weiteren üblichen Zusätzen gebildet ist.
8. Bauelement nach einem oder mehreren der vorhergehenden Ansprüche, dadurch gekennzeichnet, dass der Mörtel selbstverlaufend formuliert ist.
9. Bauelement mit einer Deckschicht aus keramischen Fliesen bzw. Platten oder Naturstein, einer Zwischenschicht aus Polystyrol-Hartschaumstoff oder Polyurethan, wobei diese Schichten in einer Dicke von 5 bis 15 mm durch einen in selbstverlaufender Formulierung eingestellten Mörtel aus:
100 bis 350 Gew.-Teilen Zement,
100 bis 1600 Gew.-Teilen quarzitischen und/oder calcitischen Sanden bzw. Mehlen,
5 bis 400 Gew.-Teilen polymerem Bindemittel,
0,1 bis 20 Gew.-Teilen Verflüssiger, sowie
0 bis 500 Gew.-Teilen weiteren üblichen Zusätzen,
verbunden sind und die unter- bzw. rückseitige Schicht gegebenenfalls aus Gipskartonplatte besteht.
10. Bauelement mit einer Deckschicht aus keramischen Fliesen bzw. Platten oder Naturstein, einer Zwischenschicht aus Polystyrol-Hartschaumstoff oder Polyurethan, wobei diese Schichten in einer Dicke von 5 bis 15 mm durch einen in selbstverlaufender Formulierung eingestellten Mörtel aus:
200 bis 320 Gew.-Teilen Portlandzement,
400 bis 800 Gew.-Teilen quarzitigchem Sand,
30 bis 150 Gew.-Teilen einer wässrigen Dispersion eines Butadien-Styrol-Mischpolymerisates,
5 bis 15 Gew.-Teilen eines Sulfonsäuregruppen enthaltenden Melamin-Formaldehyd-Kondensates,
und üblichen Zusätzen verbunden sind.
11. Verfahren zur Herstellung von transportablen Bauelementen nach einem oder mehreren der Vorhergehenden Ansprüche, dadurch gekennzeichnet, dass in einer Abfolge in eine offene Form zunächst das als Sichtfläche dienende Material und sodann der fliessfähige, hydraulisch erhärtende, kunststoffvergütete Mörtel eingebracht und sodann weitere Zwischen- und Rückschichten eingeführt und mit gegebenenfalls weiterem fliessfähigem, hydraulisch erhärtenden kunststoffvergüteten Mörtel verbunden werden.

## Claims

1. Double or multi-layered transportable construction elements comprising covering and/or intermediate layers, if necessary consisting of a variety of substances, characterised in that the composite is prepared in a multip-step process from a hydraulically hardening, flowable mortar which is enriched with synthetic-material and which is formed by adding water to:
    cement,
    quartzitic and/or calcitic sands or powders,
    polymeric binder,
    wetting agent,
    and if necessary further usual additives.

2. Constructional element according to claim 1 characterised in that the cement component of the mortar consists at least partially of Portland cement.

3. Constructional element according to claim 1 characterised in that the cement preferably is PZ35F, PZ45F, PZ55 according to DIN 1164, or mixtures thereof.

4. Constructional element according to one or more of claims 1 to 3 characterised in that the polymeric binder is formulated on the basis of monomers, which are selected from styrol, acrylic acid ester, methacryl acid ester, butadiene and vinyl esters, olefins, vinyl halogenides, vinylidene halogenides and natural polymers individually or in a mixture in the form of an aqueous dispersion and/or of a powder dispersable in water.

5. Constructional element according to one or more of claims 1 to 4 characterised in that the wetting agent is an anionic condensation product of melamine formaldehyde, naphthalene sulphonate, lignin sulphonate, casein or mixtures thereof, which contains sulphuric acid groups.

6. Constructional element according to one or more of the preceding claims characterised in that the usual additives comprise colloids, pigments, defoamers, accelerators, retardents, latently hydraulic additives or mixtures thereof.

7. Constructional element according to one or more of the preceding claims characterised in that the mortar to be constituted with water is formed from:
    100 to 350 parts by weight of cement,
    100 to 1600 parts by weight of quartzitic and/or calcitic sands or powders,
    5 to 400 parts by weight of polymeric binder,
    0.1 to 20 parts by weight of wetting agent, and
    0 to 500 parts by weight of further usual additives.

8. Constructional element according to one or more of the preceding claims characterised in that the mortar is formulated to be flowable.

9. Constructional element comprising a cover layer of ceramic tiles or plates or natural stone, an intermediate layer of polystyrol hard-foam material or polyurethane, these layers being bonded together in a thickness of 5 to 15 mm by a mortar of flowable constitution of:
    100 to 350 parts by weight of cement,
    100 to 1600 parts by weight of quartzitic and/or calcitic sands or powders,
    5 to 400 parts by weight of polymeric binder,
    0.1 to 20 parts by weight of wetting agent, and
    0 to 500 parts by weight of the further usual additives,
    and the lower or rear layer consisting, if necessary, of plaster board.

10. Constructional element comprising a cover layer of ceramic tiles or plates or natural stone, an intermediate layer of polystyrol-hard-foam material or polyurethane, these layers being connected together in a thickness of 5 to 15 mm by a mortar of flowable constitution of:
    200 to 320 parts by weight of portland cement,
    400 to 800 parts by weight of quartzitic sand,
    30 to 150 parts by weight of an aqueous dispersion of a butadiene-styrol mixed polymer,
    5 to 15 parts by weight of a melamine formaldehyde condensate containing sulphuric acid groups, and the usual additives.

11. Method for the manufacture of transportable constructional elements according to one or more of the preceding claims characterised in that in succession first the material serving as visible surface and then the flowable hydraulically hardening synthetic material enriched mortar are introduced into an open mould and then further intermediate and rear layers are introduced and are combined if necessary with further flowable hydraulically hardening synthetic material enriched mortar.

## Revendications

1. Elément de construction transportable, à deux couches ou plus, comportant éventuellement des couches intermédiaires et/ou de couverture constituées de matériaux différents, caractérisé en ce que la liaison est effectuée, en une suite d'opérations, au moyen d'un mortier à prise hydraulique capable de s'écouler et amélioré par des matières plastiques, et qui, avec addition d'eau, est formé,
    - de ciment,
    - de sable ou poudre quartzitique et/ou calcitique,
    - d'un liant polymère,
    - d'un fluidifiant,
    - et éventuellement d'autres adjuvants habituels.

2. Elément de construction selon la revendication 1, caractérisé en ce que la part ciment du mortier est au moins partiellement constituée de ciment Portland.

3. Elément de construction selon la revendication 2, caractérisé en ce que le ciment est de préférence un ciment PZ35F, PZ45F, PZ55 selon DIN 1164, ou un mélange de ceux-ci.

4. Elément de construction selon une ou plusieurs des revendications 1 à 3, caractérisé en ce que le liant polymère est formulé à base de monomères choisis parmi le styrène, les acrylates, les méthacrylates, le butadiène et les esters de vinyle, d'oléfines, d'halogénures de vinyle, d'halogénures de vinylidène, de polymères naturels, seuls ou en mélange, sous forme d'une dispersion aqueuse et/ou d'une poudre redispersable dans l'eau.

5. Elément de construction selon une ou plusieurs des revendications 1 à 4, caractérisé en ce que le fluidifiant est un produit de condensation, contenant des groupes anioniques sulfoniques, à base de mélamine-formaldéhyde, de naphtalène-sulfonate, de lignine-sulfonate, de caséine, ou de mélanges de ceux-ci.

6. Elément de construction selon une ou plusieurs des revendications précédentes, caractérisé en ce que les adjuvants habituels sont des colloïdes, des pigments, des démoussants, des accélérants, des retardants, des agrégats hydrauliques latents, ou des mélanges de ces corps.

7. Elément de construction selon une ou plusieurs des revendications précédentes, caractérisé en ce que le mortier à gâcher avec de l'eau est constitué de:
- 100 à 350 parties en poids de ciment,
- 100 à 1600 parties en poids de sable ou poudre quartzitique et/ou calcitique,
- 5 à 400 parties en poids de liant polymère,
- 0,1 à 20 parties en poids de fluidifiant, et
- 0 à 500 parties en poids d'autres adjuvants habituels.

8. Elément de construction selon une ou plusieurs des revendications précédentes, caractérisé en ce que le mortier est formulé de façon qu'il puisse s'écouler de lui-même.

9. Elément de construction comportant une couche de couverture en carreaux ou plaques céramiques ou en pierre naturelle, une couche intermédiaire en mous se rigide de polystyrène ou en polyuréthane, dans lequel ces couches sont liées, en une épaisseur de 5 à 15 mm, au moyen d'un mortier appliqué en une formulation capable de s'écouler d'elle-même et constitué de:
- 100 à 350 parties en poids de ciment,
- 100 à 1600 parties en poids de sable ou poudre quartzitique et/ou calcitique,
- 5 à 400 parties en poids de liant polymère,
- 0,1 à 20 parties en poids de fluidifiant, et
- 0 à 500 parties en poids d'autres adjuvants habituels, et la couche du côté de dessous ou de dos est éventuellement constituée de plaques de carton-plâtre.

10. Elément de construction comportant une couche de couverture en carreaux ou plaques céramiques ou en pierre naturelle, et une couche intermédiaire en mousse dure de polystyrène ou en polyuréthane, dans lequel ces couches sont liées, en une épaisseur de 5 à 15 mm, au moyen d'un mortier, appliqué en une formulation capable de s'écouler d'elle-même et constitué de:
- 200 à 320 parties en poids de ciment de Portland,
- 400 à 800 parties en poids de sable quartzitique,
- 30 à 150a parties en poids d'une dispersion aqueuse d'un copolymère de butadiène et de styrène,
- 5 à 15 parties en poids d'un produit de condensation formaldéhyde-mélamine contenant des groupes sulfoniques,
- et des adjuvants habituels.

11. Procédé de fabrication d'élémnts de construction transportables selon une ou plusieurs des revendications précédentes, caractérisé en ce que l'on introduit en séquence, dans un moule ouvert, d'abord le matériau qui doit servir de surface visible, et ensuite le mortier à prise hydraulique, capable de s'écouler et amélioré par des matières plastiques, puis on forme les autres couches intermédiaires et de dos, et on les lie avec éventuellement une quantité supplémentaire de mortier à prise hydraulique, capable de s'écouler et amélioré par des matières plastiques.